# EUROPÄISCHE PATENTANMELDUNG

(11) **EP 3 090 823 A1**
(43) Veröffentlichungstag der Anmeldung: **09.11.2016**
(21) Anmeldenummer: 15001404.1
(22) Anmeldetag: 08.05.2015
(51) Int. Cl.: B23C 3/12, B27D 5/00, B23C 5/00

(54) **KOMBINIERTES FRÄS- UND ZIEHKLINGENWERKZEUG**

(71) Anmelder: Ledermann GmbH & Co. KG, 72160 Horb (DE)
(72) Erfinder: Dressler, Martin Dr., 73614 Schorndorf (DE); Hampel, Steffen, 72108 Rottenburg-Kiebingen (DE); Knauss, Maximilian, 72160 Horb am Neckar (DE)
(74) Vertreter: Zurhorst, Stefan

(57) **Zusammenfassung**

Die Erfindung betrifft ein kombiniertes Fräs- und Ziehklingenwerkzeug (1). Das kombinierte Fräs- und Ziehklingenwerkzeug (1) umfasst mindestens einen Fräswerkzeugkörper (2) und mindestens einen Ziehklingenwerkzeugkörper (3). Der Fräswerkzeugkörper (2) und der Ziehklingenwerkzeugkörper (3) sind getrennt voneinander ausgebildet. In einem Ziehbetriebsmodus (4) ist der Ziehklingenwerkzeugkörper (3) drehfest gelagert und das kombinierte Fräs- und Ziehklingenwerkzeug (1) als Ziehklingenwerkzeug nutzbar. In einem Drehbetriebsmodus (5) ist der Fräswerkzeugkörper (2) um eine Drehachse (6) des Fräswerkzeugkörpers (2) drehbar und das kombinierte Fräs- und Ziehklingenwerkzeug (1) als Fräswerkzeug nutzbar. Der Fräswerkzeugkörper (2) und der Ziehklingenwerkzeugkörper (3) sind im Drehbetriebsmodus (5) gemeinsam um die Drehachse (6) drehbar. Der Fräswerkzeugkörper (2) und der Ziehklingenwerkzeugkörper (3) sind in Richtung (7) der Drehachse (6) gegeneinander beweglich gelagert.

## Beschreibung

Die Erfindung betrifft ein kombiniertes Fräs- und Ziehklingenwerkzeug nach dem Oberbegriff des Anspruchs 1.

Insbesondere Platten für den Möbelbau werden zum Schutz des Kerns vor äußeren Einflüssen und aus gestalterischen Gründen mit einer Deckschicht versehen. Die großflächigen Ober- und Unterseiten der Platten sind meistens mit einer dekorativen Deckschicht, z. B. einer Kunststoffschicht versehen. Auf die Umfangsflächen werden mit unterschiedlichen Verfahren Kantenbänder aufgebracht. Als Kantenbänder werden beispielsweise Kunststoffleisten verwendet, die mit Kantenleimaggregaten maschinell aufgeklebt werden. Um Dickentoleranzen der Platte und fertigungstechnische Ungenauigkeiten ausgleichen zu können, steht das Kantenband zunächst beidseitig der Platte geringfügig über. Um diese Überstände und aus der Klebefuge herausgequollenen Kleber zu entfernen, werden die Kantenbänder nach dem Aufkleben mit rotierenden Fräswerkzeugen behandelt. Hierbei werden die über die Ober- bzw. Unterseite der Platte herausragenden Bereiche der Kantenbänder entfernt. Diese Behandlung mit rotierenden Fräswerkzeugen wird gleichzeitig dazu genutzt, die Kantenbänder anzufasen oder zu profilieren, so dass z. B. eine gerundete oder gebrochene Kante entsteht. Hierbei verursachen die Fräswerkzeuge Schnittschläge, die sich im bearbeiteten Bereich des Kantenbandes abzeichnen. Zusätzlich kann die Kante beim Fräsen matt werden.

In einem weiteren Bearbeitungsschritt werden dann die Schnittschläge weitgehend beseitigt, indem ein geradlinig arbeitendes Werkzeug, die sogenannte Ziehklinge, über die Kante gezogen wird. Hierbei erhalten die Kante und das Kantenband die endgültige Form. Aus der DE 198 34 440 A1 ist ein Bündigfräs- und Ziehklingenaggregat bekannt, das von einer Spindeleinheit eines Bearbeitungszentrums angetrieben wird. Das Bündigfräs- und Ziehklingenaggregat umfasst ein Fräswerkzeug und ein Ziehklingenwerkzeug, die beide um eine gemeinsame Achse des Aggregats drehbar sind. Die Drehachse des Aggregats ist auf der Verbindungslinie zwischen Fräswerkzeug und Ziehklingenwerkzeug angeordnet, so dass sich das Fräswerkzeug und das Ziehklingenwerkzeug in Bezug auf die Drehachse des Aggregats gegenüberliegen. Das Fräswerkzeug besitzt eine weitere Drehachse, um die es in einem ersten Bearbeitungsschritt von der Spindeleinheit drehend angetrieben wird. Nach einer Drehbewegung des gesamten Bündigfräs- und Ziehklingenaggregats um die Drehachse des Aggregats um 180° kann das Ziehklingenwerkzeug in einem zweiten Bearbeitungsschritt eingesetzt werden.

Da die Werkstücke üblicherweise fertigungsbedingte Dickentoleranzen aufweisen, ist die Einhaltung eines genauen Abstandes der Werkzeuge zur Werkstückoberfläche schwierig. In der DE 198 34 440 A1 ist deshalb sowohl für das Fräswerkzeug als auch für das Ziehklingenwerkzeug konstruktiv jeweils eine Tastvorrichtung vorgesehen. Hierbei wird der Abstand eines Werkzeugreferenzpunktes zur Werkstückoberfläche bestimmt, um einen Versatz zwischen der gefrästen Kontur und der Werkstückoberfläche zu vermeiden. Nachteilig ist hierbei neben dem hohen konstruktiven Aufwand auch der Zeitbedarf für die Positionierung des jeweils zum Einsatz kommenden Werkzeugs.

Der Erfindung liegt die Aufgabe zugrunde, ein kombiniertes Fräs- und Ziehklingenwerkzeug der gattungsgemäßen Art derart weiterzubilden, dass damit ein einfacheres und schnelleres Arbeiten möglich ist.

Diese Aufgabe wird durch ein kombiniertes Fräs- und Ziehklingenwerkzeug mit den Merkmalen des Anspruchs 1 gelöst.

Nach der Erfindung ist vorgesehen, dass der Fräswerkzeugkörper und der Ziehklingenwerkzeugkörper im Drehbetriebsmodus gemeinsam um die Drehachse drehbar sind, und dass der Fräswerkzeugkörper und der Ziehklingenwerkzeugkörper in Richtung der Drehachse gegeneinander beweglich gelagert sind. Mittels einer axialen Hubbewegung kann die Ziehklingenschneide so verschoben werden, dass sie bei einer Drehbewegung nicht mit dem Werkstück in Eingriff gerät. Im Drehbetriebsmodus kommt also allein die Frässchneide zum Einsatz. Beim Umschalten in den Ziehbetriebsmodus erfolgt lediglich eine rein axiale Neupositionierung der Ziehklingenschneide, ohne dass das Werkzeug bzw. dessen Drehachse insgesamt neu positioniert werden muss. Eine einmalige Ausrichtung des kombinierten Fräs- und Ziehklingenwerkzeug gegenüber dem Werkstück, ggf. mit nur einer einzigen, gemeinsamen Tastvorrichtung reicht aus, um im Anschluss an den Fräsbetrieb auch einen passgenauen Ziehvorgang durchführen zu können.

Vorteilhaft ist vorgesehen, dass am Fräswerkzeugkörper mindestens eine Frässchneide angeordnet ist, und dass am Ziehklingenwerkzeugkörper mindestens eine Ziehklingenschneide angeordnet ist. Im Ziehbetriebsmodus liegen die Ziehklingenschneide und die Frässchneide zumindest teilweise gemeinsam in einer Ebene senkrecht zur Drehachse. In jeder Ebene senkrecht zur Drehachse, die sowohl die Frässchneide als auch die Ziehklingenschneide schneidet, ist der Abstand der Frässchneide von der Drehachse vorteilhaft kleiner als der Abstand der Ziehklingenschneide von der Drehachse. Auf diese Weise ist sichergestellt, dass bei gleichem Abstand zwischen der Drehachse des kombinierten Fräs- und Ziehklingenwerkzeugs und einem bearbeiteten Werkstück im Drehbetriebs- und im Ziehbetriebsmodus die bei der Bearbeitung des Werkstücks im Ziehbetriebsmodus des kombinierten Fräs- und Ziehklingenwerkzeugs entstehende Kontur ausschließlich von der Ziehklinge bewirkt wird.

Vorteilhaft ist in Richtung der Drehachse zwischen dem Fräswerkzeugkörper und dem Ziehklingenwerkzeugkörper mindestens ein Fliehkörper angeordnet. Der Fräswerkzeugkörper, der Ziehklingenwerkzeugkörper und der Fliehkörper bilden Elemente einer Baugruppe. Zwischen den Elementen der Baugruppe ist vorteilhaft mindestens eine schiefe Ebene ausgebildet. Die schiefe Ebene erstreckt sich in radialer Richtung zur Drehachse. Der Fräswerkzeugkörper und der Ziehklingenwerkzeugkörper weisen je mindestens eine Kontaktfläche mit dem Fliehkörper auf. Der Fliehkörper kontaktiert in mindestens einem der beiden Betriebsmodi (Drehbetriebsmodus oder Ziehbetriebsmodus) beide Kontaktflächen zugleich derart, dass der Abstand zwischen einem Fräswerkzeugkörper-Referenzpunkt und einem Ziehklingenwerkzeugkörper-Referenzpunkt durch den Fliehkörper beeinflusst ist. Dadurch befinden sich der Fräswerkzeugkörper und der Ziehklingenwerkzeugkörper in Abhängigkeit des Betriebsmodus in verschiedenen Abständen zueinander. Über den Fliehkörper können der Fräswerkzeugkörper und der Ziehklingenwerkzeugkörper in Richtung der Drehachse des kombinierten Fräs- und Ziehklingenwerkzeugs gegeneinander verschoben werden. Auf diese Weise können auch die am Fräswerkzeugkörper angeordnete Frässchneide und die am Ziehklingenwerkzeugkörper angeordnete Ziehklingenschneide mittels des Fliehkörpers in Richtung der Drehachse gegeneinander verschoben werden. Die im Falle der Drehbewegung des Werkzeuges auf die Fliehkörper wirkenden Fliehkräfte werden also für eine selbsttätige Umschaltung vom Ziehbetriebsmodus in den Drehbetriebsmodus genutzt.

Vorteilhaft ist vorgesehen, dass die schiefe Ebene an mindestens einer der beiden Kontaktflächen ausgebildet ist. Vorteilhaft nimmt der Abstand der Kontaktflächen zueinander mit größer werdendem radialen Abstand zur Drehachse ab. Dadurch ist es möglich, dass der Fliehkörper im Drehbetriebsmodus unter Einwirkung der Zentrifugalkraft den Abstand zwischen den Kontaktflächen des Fräswerkzeugkörpers und des Ziehklingenwerkzeugkörpers, und damit zwischen den Referenzpunkten des Fräswerkzeugkörpers und des Ziehklingenwerkzeugkörpers, in Richtung der Drehachse vergrößert. Unter Einwirkung der Zentrifugalkraft wird der Fliehkörper von der Drehachse fort beschleunigt und gleitet auf der schiefen Ebene von der Drehachse weg. Da der Abstand zwischen der Kontaktfläche des Fräswerkzeugkörpers und der Kontaktfläche des Ziehklingenwerkzeugkörpers in größerem Abstand zur Drehachse kleiner ist, kontaktiert der Fliehkörper bei ausreichender Zentrifugalkraft beide Kontaktflächen und drückt so den Fräswerkzeugkörper und den Ziehklingenwerkzeugkörper in Richtung der Drehachse auseinander.

Vorteilhaft ist im Drehbetriebsmodus in jeder Ebene senkrecht zur Drehachse, die sowohl die Frässchneide als auch die Ziehklingenschneide schneidet, der Abstand der Frässchneide von der Drehachse größer als der Abstand der Ziehklingenschneide von der Drehachse. Dadurch ist gewährleistet, dass die Frässchneide im Drehbetriebsmodus zur Bearbeitung des Werkstücks derart eingesetzt werden kann, dass die durch das kombinierte Fräs- und Ziehklingenwerkzeug bewirkte Kontur im Werkstück ausschließlich durch die Frässchneide entsteht. Hinsichtlich der vom kombinierten Fräs- und Ziehklingenwerkzeug auf das bearbeitete Werkstück übertragenen Kontur gibt es im Drehbetriebsmodus keine Kreuzungspunkte der Frässchneide und der Ziehklingenschneide.

Vorteilhaft ist der Ziehklingenwerkzeugkörper in Richtung auf den Fräswerkzeugkörper vorgespannt. Im Ziehbetriebsmodus, also bei fehlender Drehbewegung, wirkt keine Zentrifugalkraft auf den Fliehkörper, sondern lediglich die Vorspannkraft zwischen Ziehklingenwerkzeug und Fräswerkzeugkörper. Nach Beendigung des Drehbetriebsmodus wird der Fliehkörper durch die genannte Vorspannkraft im Wechselspiel mit der schiefen Ebene wieder in seine radial innere Ruhelage gebracht, während der Abstand der Referenzpunkte des Ziehklingenwerkzeugkörpers und des Fräswerkzeugkörpers erneut minimiert und damit in die Ziehposition überführt wird.

Ein Ausführungsbeispiel der Erfindung ist nachstehend anhand der Zeichnung näher erläutert. Es zeigen:
- Fig. 1: in einer perspektivischen Darstellung ein erfindungsgemäßes kombiniertes Fräs- und Ziehklingenwerkzeug im Ziehbetriebsmodus,
- Fig. 2: in einer perspektivischen Darstellung das kombinierte Fräs- und Ziehklingenwerkzeug nach Fig. 1 im Drehbetriebsmodus,
- Fig. 3: in einer Stirnansicht das kombinierte Fräs- und Ziehklingenwerkzeug nach den Fig. 1 und 2,
- Fig. 4: in einer Schnittdarstellung gemäß der in Fig. 3 mit IV gekennzeichneten Schnittfläche das kombinierte Fräs- und Ziehklingenwerkzeug aus den Fig. 1 und 3 im Ziehbetriebsmodus mit Einzelheiten zu radial innen liegenden Fliehkörpern,
- Fig. 5: die Anordnung nach Fig. 4 im Drehbetriebsmodus mit radial außen liegenden Fliehkörpern,
- Fig. 6 und 7: in Explosionsdarstellungen das kombinierte Fräs- und Ziehklingenwerkzeug aus den Fig. 1 bis 5 mit weiteren Einzelheiten zu seinem konstruktiven Aufbau, und
- Fig. 8: in einer perspektivischen Ansicht das kombinierte Fräs- und Ziehklingenwerkzeug nach den Fig. 1 bis 7 im Ziehbetriebsmodus.

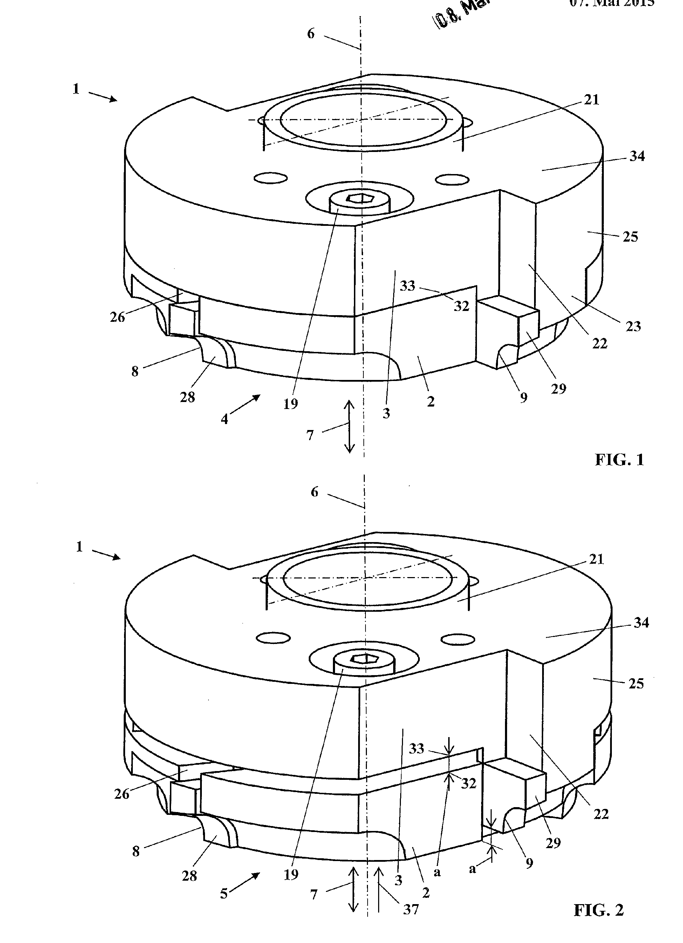

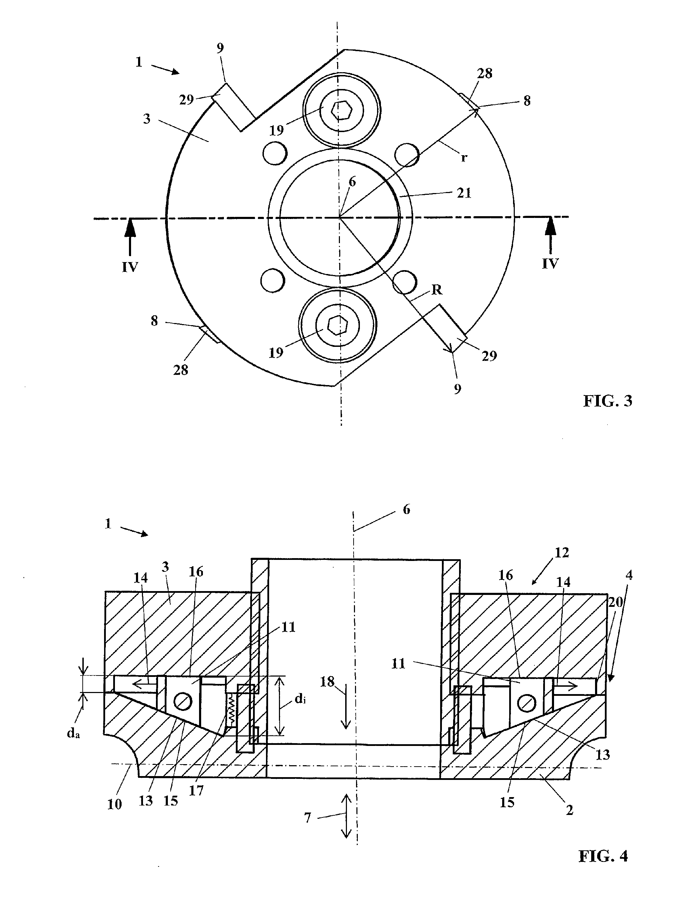

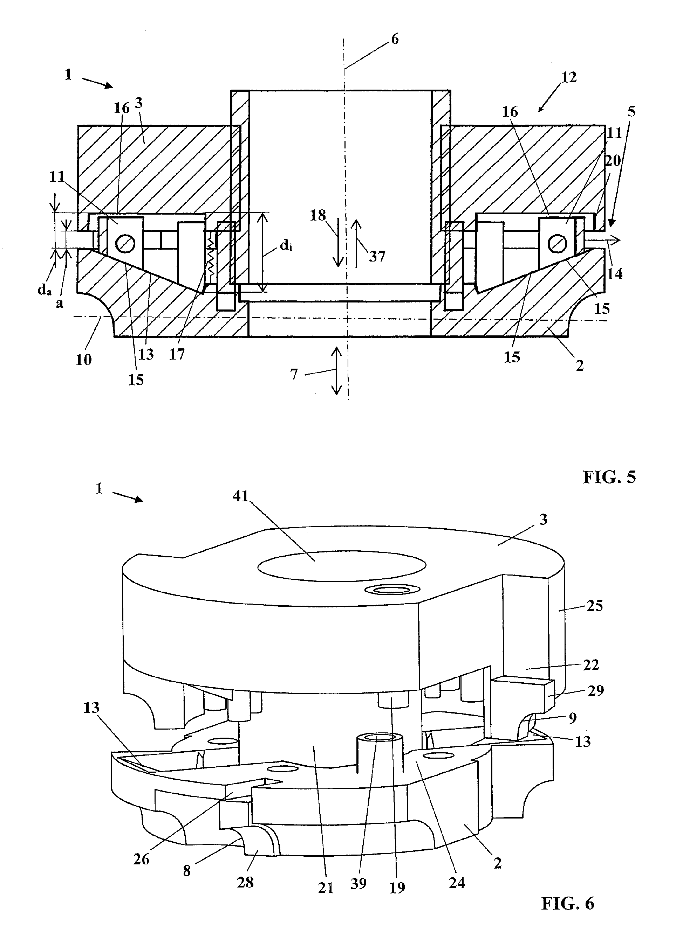

Die Fig. 1 und 2 zeigen in perspektivischer Ansicht ein kombiniertes Fräs- und Ziehklingenwerkzeug 1 umfassend einen Fräswerkzeugkörper 2 und einen Ziehklingenwerkzeugkörper 3. Das kombinierte Fräs- und Ziehklingenwerkzeug 1 kann in einem Ziehbetriebsmodus 4 gemäß Fig. 1 als Ziehklingenwerkzeug und in einem in Fig. 2 dargestellten Drehbetriebsmodus 5 als Fräswerkzeug eingesetzt werden. Hierzu sind am Fräswerkzeugkörper 2 mindestens eine, hier mehrere Frässchneiden 8 und am Ziehklingenwerkzeugkörper 3 mindestens eine, hier mehrere Ziehklingenschneiden 9 über dem Umfang verteilt angeordnet. Zum Übergang vom Ziehbetriebsmodus 4 in den Drehbetriebsmodus 5 wird die Zentrifugalkraft von zwei in den Fig. 4 und 5 gezeigten Fliehkörpern 11 genutzt.

Das kombinierte Fräs- und Ziehklingenwerkzeug 1 weist im Wesentlichen die Form eines Hohlzylinders auf. Dieser Hohlzylinder besitzt eine Hohlzylinderlängsachse. Die Orientierungsrichtung der Hohlzylinderlängsachse ist identisch mit einer Richtung 7 einer Drehachse 6. Die Richtung 7 ist mit einem Doppelpfeil gekennzeichnet und kann in beide Richtungen der Drehachse 6 zeigen. Der Fräswerkzeugkörper 2 und der Ziehklingenwerkzeugkörper 3 sind in Richtung 7 der Drehachse 6 gegeneinander beweglich gelagert. In Fig. 1 befindet sich das kombinierte Fräs- und Ziehklingenwerkzeug 1 im Ziehbetriebsmodus 4, in dem der Abstand zwischen dem Ziehklingenwerkzeugkörper 3 und dem Fräswerkzeugkörper 2 minimal ist. Im gezeigten Ausführungsbeispiel liegt hierzu der Ziehklingenwerkzeugkörper 3 flächig auf dem Fräswerkzeugkörper 2 auf. Im Drehbetriebsmodus 5 nach Fig. 2 befinden sich der Fräswerkzeugkörper 2 und der Ziehklingenwerkzeugkörper 3 in einem Abstand a zueinander, der jedenfalls größer ist als ein - falls überhaupt vorhandener - Abstand im Ziehbetriebsmodus 4 gemäß Fig. 1.

Das kombinierte Fräs- und Ziehklingenwerkzeug 1 wird für den Betrieb in beiden Betriebsmodi auf einer gemeinsamen, nicht dargestellten Werkzeugspindel derart montiert, dass sowohl der Fräswerkzeugkörper 2 als auch der Ziehklingenwerkzeugkörper 3 drehfest mit der Werkzeugspindel verbunden sind. Dabei ist außerdem der Fräswerkzeugkörper 2 in Axialrichtung fest mit der Werkzeugspindel verbunden, während lediglich der Ziehklingenwerkzeugkörper 3 eine Axialbewegung ausführen kann. In dem in Fig. 2 dargestellten Drehbetriebsmodus 5 sind sowohl der Ziehklingenwerkzeugkörper 3 als auch der Fräswerkzeugkörper 2 gemeinsam um die Drehachse 6 drehend angetrieben. Das kombinierte Fräs- und Ziehklingenwerkzeug 1 ist gegenüber dem nicht dargestellten Werkstück derart positioniert und ausgerichtet, dass die Frässchneiden 8 bei einer Vorschubbewegung des Werkzeuges mit dem Werkstück in Eingriff gelangen und Späne davon abtragen. Gleichzeitig sind aber die Ziehklingenschneiden 9 aufgrund des Abstandes a soweit axial angehobenen, dass sie nicht in Kontakt mit dem Werkstück geraten und im Drehbetriebsmodus 5 passiv bleiben.

Im Anschluss an eine auf diese Weise durchgeführte erste Kantenbearbeitung des Werkstückes erfolgt eine Nachbearbeitung im Ziehbetriebsmodus 4 bei unterbundener Drehbewegung des Werkzeuges. Beim Übergang in den in Fig. 1 gezeigten Ziehbetriebsmodus 4 behalten die Werkzeugspindel und der fest daran montierte Fräswerkzeugkörper 2 ihre zuvor eingestellte Axialposition bei, führen aber keine Drehbewegung mehr aus. Der Ziehklingenwerkzeugkörper 3 wird ausgehend von seiner angehobenen Fräsposition nach Fig. 2 um den Abstand a in die Ziehposition nach Fig. 1 abgesenkt. Außerdem wird eine Drehwinkelposition eingestellt und beibehalten, in der nun eine der Ziehklingenschneiden 9 im Eingriff mit der Kante des Werkstückes steht. In diesem Zustand wird das kombinierte Fräs- und Ziehklingenwerkzeug 1 allein lateral und ohne Drehantrieb gegenüber dem nicht dargestellten Werkstück verfahren, wobei die Ziehklingenschneiden 9 die Kante abziehen und dadurch in ihre gewünschte Oberflächenqualität bringen.

Die oben zusammengefasste Funktion ergibt sich aus dem konstruktiven Aufbau wie folgt: Der Ziehklingenwerkzeugkörper 3 und der Fräswerkzeugkörper 2 sind im Wesentlichen hohlzylindrisch geformt. Der Ziehklingenwerkzeugkörper 3 besitzt eine obere Kreisringfläche 34, die sowohl im Ziehbetriebsmodus 4 als auch im Drehbetriebsmodus 5 dem Fräswerkzeugkörper 2 abgewandt ist. An der Seite des Ziehklingenwerkzeugkörpers 3, die der oberen Kreisringfläche 34 gegenüberliegt, befinden sich zwei sich gegenüberliegende, radial zur Drehachse 6 außen liegende Fortsätze 23 des Ziehklingenwerkzeugkörpers 3. Die Fortsätze 23 übergreifen den Fräswerkzeugkörper 2. Der im Wesentlichen hohlzylindrische Ziehklingenwerkzeugkörper 3 besitzt eine Mantelfläche 25. Die Mantelfläche 25 des Ziehklingenwerkzeugkörpers 3 wird von den Fortsätzen 23 fortgesetzt. In der Mantelfläche 25 des hohlzylindrischen Ziehklingenwerkzeugkörpers 3 sind zwei sich gegenüberliegende, im Wesentlichen quaderförmige Ausnehmungen derart eingebracht, dass durch die Ausnehmungen Befestigungsflächen 22 festgelegt sind. Die Befestigungsflächen 22 erstrecken sich sowohl in radialer Richtung zur Drehachse 6 als auch in der Richtung 7 der Drehachse 6. Ein Teil der Befestigungsflächen 22 wird von den Fortsätzen 23 gebildet. Auf diesem Teil der Befestigungsflächen 22 sind Ziehklingen 29 aufgebracht. Die Ziehklingen 29 besitzen Ziehklingenschneiden 9. Die Ziehklingen 29 sind derart auf den Befestigungsflächen 22 befestigt, dass die Ziehklingenschneiden 9 von der Drehachse 6 fortzeigen und den Befestigungsflächen 22 abgewandt sind. Die Ziehklingenschneiden 9 ragen über die Mantelfläche des Ziehwerkzeugkörpers 3 hinaus.

In den Fräswerkzeugkörper 2 sind in radialer Richtung zur Drehachse 6 Ausnehmungen 26 zur Aufnahme von Fräsplatten 28 eingebracht. Die Fräsplatten 28 besitzen Frässchneiden 8. Die Fräsplatten 28 sind derart in die Ausnehmungen 26 eingebracht, dass die Frässchneiden 8 von der Drehachse 6 fortzeigen. Auch die Frässchneiden 8 ragen über die Mantelfläche des Fräswerkzeugkörpers 2 hinaus.

Im Ziehbetriebsmodus 4 befinden sich die Fräsplatten 28 und die Ziehklingen 29 in der Richtung 7 der Drehachse 6 auf derselben Höhe. Wie die Fig. 1 und 3 zeigen, ist in jeder senkrecht zur Drehachse 6 liegenden Ebene 10 (Fig. 4), die sowohl die Frässchneide 8 als auch die Ziehklingenschneide 9 schneidet, der Abstand r der Frässchneide 8 von der Drehachse 6 kleiner als der Abstand R der Ziehklingenschneide 9 von der Drehachse 6. Eine solche Ebene 10 ist beispielhaft in den Fig. 4 und 5 dargestellt. Auf diese Weise ist sichergestellt, dass bei gleichbleibender Orientierung des kombinierten Fräs- und Ziehklingenwerkzeugs 1 gegenüber einem bearbeiteten Werkstück sowohl im Ziehbetriebsmodus 4 als auch im Drehbetriebsmodus 5 durch die Bearbeitung mit der Ziehklingenschneide 9 mehr Material vom bearbeiteten Werkstück abgenommen wird als durch die Bearbeitung mit der Frässchneide 8.

Im Drehbetriebsmodus 5 nach Fig. 2 befinden sich der Fräswerkzeugkörper 2 und der Ziehklingenwerkzeugkörper 3 in einem Abstand a zueinander. In Fig. 2 ist ein Referenzpunkt 32 auf der dem Ziehklingenwerkzeugkörper 3 zugewandten Oberfläche des Fräswerkzeugkörpers 2 markiert. Auf der diesem Referenzpunkt 32 in der Richtung 7 der Drehachse 6 gegenüberliegenden Oberfläche des Ziehklingenwerkzeugkörpers 3 ist ein Referenzpunkt 33 des Ziehklingenwerkzeugkörpers 3 markiert. Im Drehbetriebsmodus 5 befinden sich der Referenzpunkt 32 und der Referenzpunkt 33 im Abstand a zueinander. Wie in Fig. 1 gezeigt, ist der Abstand zwischen dem Referenzpunkt 32 und dem Referenzpunkt 33 im Ziehbetriebsmodus 4 geringer als im Drehbetriebsmodus 5, hier sogar vernachlässigbar klein. Fig. 2 zeigt, dass der Ziehklingenwerkzeugkörper 3 im Drehbetriebsmodus 5 in eine Verschieberichtung 37 in Richtung der Drehachse 6 weg vom Fräswerkzeugkörper 2 um den Abstand a verschoben ist. Da die Ziehklingen 29 am Ziehklingenwerkzeugkörper 3 befestigt sind, sind auch die Ziehklingen 29 gegenüber den Fräsplatten 28 in die Verschieberichtung 37 um den Abstand a verschoben. Der Abstand a ist so groß, dass in jeder Ebene 10 senkrecht zur Drehachse 6, die sowohl die Frässchneide als auch die Ziehklingenschneide 9 schneidet, der in Fig. 3 gezeigte Abstand r der Frässchneide 8 von der Drehachse 6 größer ist als der ebenfalls in Fig. 3 gezeigte Abstand R der Ziehklingenschneide 9 von der Drehachse 6. Somit ist im Drehbetriebsmodus 5 die von der Frässchneide 8 bewirkte Fräskontur nicht von der Ziehklingenschneide 9 beeinflusst. Im Drehbetriebsmodus 5 drehen sich die Ziehklingen 29 ebenso wie die Fräsplatten 28 um die Drehachse 6 des kombinierten Fräs- und Ziehklingenwerkzeugs 1, jedoch wird das bearbeitete Werkstück lediglich von der Frässchneide 8 bearbeitet. Es kann auch vorgesehen sein, dass der Abstand a so groß ist, dass keine Ebene senkrecht zur Drehachse 6 existiert, die sowohl die Frässchneide 8 als auch die Ziehklingenschneide 9 schneidet.

Fig. 4 zeigt einen Schnitt durch das kombinierte Fräs- und Ziehklingenwerkzeug im Ziehbetriebsmodus 4. Im Ziehbetriebsmodus 4 wird der Ziehklingenwerkzeugkörper 3 mittels einer Vorspannkraft einer schematisch eingezeichneten Feder 17 in Richtung 18 der Drehachse 6 gegen den Fräswerkzeugkörper 2 vorgespannt. Der Abstand zwischen dem Ziehklingenwerkzeugkörper 3 und dem Fräswerkzeugkörper 2 ist im Ziehbetriebsmodus 4 minimal. Die Feder 17 ist hier vereinfacht als Zugfeder dargestellt. Bevorzugt kommen aber Druckfedern mit gleicher Vorspann- und Wirkrichtung zum Einsatz. Jedenfalls sind der Fräswerkzeugkörper 2 und der Ziehklingenwerkzeugkörper 3 über die genannte Feder 17 in Richtung 18 der Drehachse 6 gegeneinander vorgespannt.

In Richtung 7 der Drehachse 6 zwischen dem Fräswerkzeugkörper 2 und dem Ziehklingenwerkzeugkörper 3 sind zwei Fliehkörper 11 angeordnet. Der Fräswerkzeugkörper 2, der Ziehklingenwerkzeugkörper 3 und die Fliehkörper 11 bilden Elemente einer Baugruppe 12. An der Baugruppe 12 sind zwei schiefe Ebenen 13 zwischen ihren Elementen ausgebildet. Die schiefen Ebenen 13 erstrecken sich in radialer Richtung 14 zur Drehachse 6 und liegen sich in Bezug auf die Drehachse 6 gegenüber.

Der Fräswerkzeugkörper 2 und der Ziehklingenwerkzeugkörper 3 weisen je zwei Kontaktflächen 15, 16 mit dem Fliehkörper 11 auf. Wie in Fig. 5 dargestellt, kontaktieren die Fliehkörper 11 im Drehbetriebsmodus 5 beide Kontaktflächen 15, 16 zugleich. Die Kontaktflächen 15 sind dem Fräswerkzeugkörper 2 zugeordnet und die Kontaktflächen 16 sind dem Ziehklingenwerkzeugkörper 3 zugeordnet. Die schiefen Ebenen 13 sind an den Kontaktflächen 15 ausgebildet. Der Abstand in Richtung 7 der Drehachse 6 der Kontaktflächen 15 zu den Kontaktflächen 16 nimmt in radialer Richtung 14 zur Drehachse 6 von der Drehachse 6 weg kontinuierlich ab. Ein radial innen liegende Abstand di zwischen der Kontaktfläche 15 und der Kontaktfläche 16 in der Richtung 7 der Drehachse 6 ist größer als ein radial außen liegende Abstand dₐ zwischen den Kontaktflächen 15 und den Kontaktflächen 16.

Im Drehbetriebsmodus 5 drehen sich sowohl der Fräswerkzeugkörper 2 als auch der Ziehklingenwerkzeugkörper 3 gleichermaßen um die gemeinsame Drehachse 6. Im Drehbetriebsmodus 5 wirkt auf die Fliehkörper 11 eine Zentrifugalkraft in der radialen Richtung 14 von der Drehachse 6 weg. Über die schiefen Ebenen 13 wird eine Kraftkomponente der Zentrifugalkraft in der Richtung 7 der Drehachse 6 auf den Fräswerkzeugkörper 2 und den Ziehklingenwerkzeugkörper 3 übertragen. Diese Kraftkomponente wirkt der Vorspannungskraft der Feder 17 entgegen und ist größer als die Vorspannungskraft der Feder 17. Die Fliehkörper 11 werden aufgrund der einwirkenden Fliehkraft gemäß Fig. 5 gegen radial äußere Anschläge 20 gepresst. Die axiale Kraftkomponente der Zentrifugalkraft bewirkt während der Auswärtsbewegung der Fliehkörper 11 eine Bewegung des Ziehklingenwerkzeugkörpers 3 in Richtung 37 der Drehachse 6 weg vom Fräswerkzeugkörper 2. Bei dieser Bewegung wird die Feder 17 gedehnt und es entsteht der Abstand a in der Richtung 7 der Drehachse 6 zwischen dem Fräswerkzeugkörper 2 und dem Ziehklingenwerkzeugkörper 3. Sobald das Werkzeug 1 in seiner Drehbewegung angehalten wird und die Fliehkräfte nicht mehr wirken, zieht die Feder 17 aufgrund ihrer Vorspannkraft den Ziehklingenwerkzeugkörper 3 wieder zurück in seine Ausgangsposition nach Fig. 4, wobei die schiefen Ebenen eine Rückstellung der Fliehkörper 11 bewirken. Falls eine Druckfeder zur Vorspannung des Fräswerkzeugkörpers 2 und des Ziehklingenwerkzeugkörpers 3 in Richtung 18 der Drehachse 6 gegeneinander vorgesehen ist, wird die Druckfeder bei einer Bewegung des Ziehklingenwerkzeugkörpers 3 in Richtung 37 der Drehachse 6 weg vom Fräswerkzeugkörper 2 gestaucht und drückt den Ziehklingenwerkzeugkörper 3 wieder zurück in seine Ausgangsposition nach Fig. 4, sobald die Fliehkräfte nicht mehr wirken.

Es kann auch vorgesehen sein, dass der radial innenliegende Abstand di in Richtung 7 der Drehachse 6 zwischen der Kontaktfläche 15 und der Kontaktfläche 16 kleiner ist als der radial außenliegende Abstand dₐ in Richtung 7 der Drehachse 6 zwischen der Kontaktfläche 15 und der Kontaktfläche 16. Der Abstand in Richtung 7 der Drehachse 6 zwischen den Kontaktflächen 15, 16 nimmt dann in radialer Richtung weg von der Drehachse 6 kontinuierlich zu. In diesem Fall sind vorteilhaft weitere Federn vorgesehen, die die Fliehkörper 11 in radialer Richtung zur Drehachse 6 auf die Drehachse 6 hin vorbelasten. Der größte Abstand zwischen dem Fräswerkzeugkörper 2 und dem Ziehklingenwerkzeugkörper 3 ist dann im Ziehbetriebsmodus gegeben. Im Drehbetriebsmodus unter Einwirkung der Zentrifugalkraft bewegen sich die Fliehkörper 11 nach außen und der Abstand zwischen dem Fräswerkzeugkörper 2 und dem Ziehklingenwerkzeugkörper 3 wird verringert. Die Fräsplatten und Ziehklingen müssen in diesem Fall entsprechend der gewünschten Anwendung angeordnet sein.

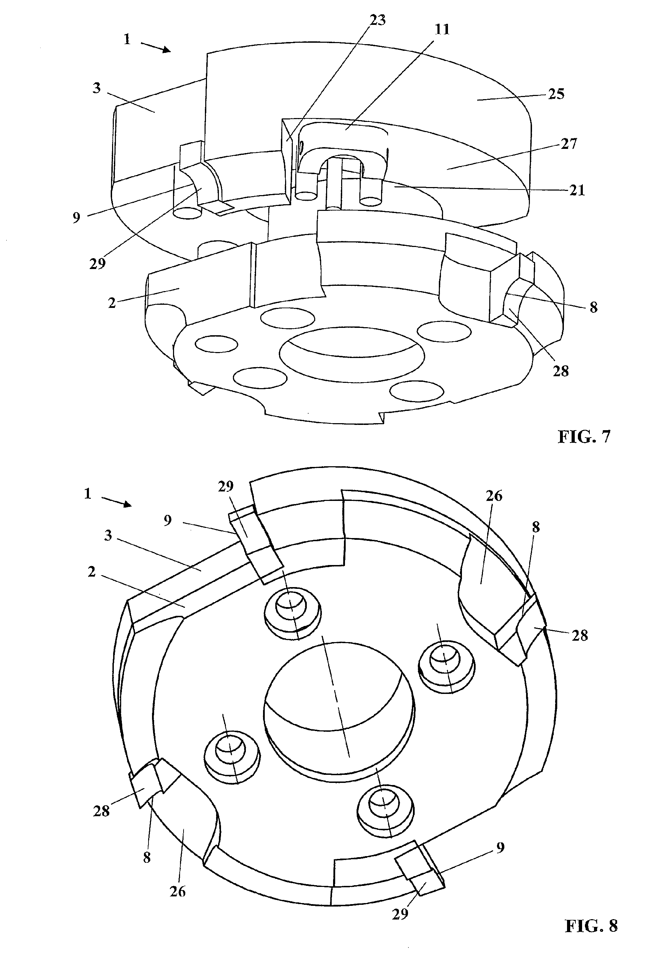

Die Fig. 6 und 7 zeigen Explosionsdarstellungen des kombinierten Fräs- und Ziehklingenwerkzeuges 1. In diesen beiden Figuren sind eine Führungstrommel 21 des Fräswerkzeugkörpers 2 und ein zugeordneter Trommelkanal 41 des Ziehklingenwerkzeugkörpers 3 dargestellt. Der Fräswerkzeugkörper 2 umfasst eine obere Kreisringfläche 24. Die obere Kreisringfläche 24 ist dem Ziehklingenwerkzeugkörper 3 zugewandt. Die Führungstrommel 21 ragt aus der oberen Kreisringfläche 24 heraus und bildet einen radial innenliegenden, kreisförmig umlaufenden Flansch des Fräswerkzeugkörpers 2. Die radial innenliegende Oberfläche der Führungstrommel 21 setzt die innenliegende zylindrische Oberfläche des im Wesentlichen hohlzylinderförmigen Fräswerkzeugkörpers 2 fort. Sowohl im Ziehbetriebsmodus 4 als auch im Drehbetriebsmodus 5 wird die Führungstrommel 21 im zugeordneten Trommelkanal 41 des Ziehklingenwerkzeugkörpers 3 geführt. Der Trommelkanal 41 ist durch den innenliegenden rohrförmigen Teil des im Wesentlichen hohlzylinderförmigen Ziehklingenwerkzeugkörpers 3 gebildet.

In den Fig. 6 und 7 sind Führungsbolzen 19 und zugeordnete Führungskanäle 39 dargestellt. Bei einer Bewegung des Ziehklingenwerkzeugkörpers 3 in Richtung der in Fig. 5 eingezeichneten Verschieberichtung 37 in Richtung der Drehachse 6 weg vom Fräswerkzeugkörpers 2 wird der Ziehklingenwerkzeugkörper 3 über die Führungsbolzen 19 in den Führungskanälen 39 geführt. Auch beim Wegfall der Zentrifugalkraft und einer Bewegung des Ziehklingenwerkzeugkörpers 3 in die in Fig. 5 eingezeichneten Richtung 18 der Vorspannung durch die Feder 17 wird der Ziehklingenwerkzeugkörper 3 über die Führungsbolzen 19 in den Führungskanälen 39 des Fräswerkzeugkörpers 2 geführt. Auf diese Weise ist sichergestellt, dass der Fräswerkzeugkörper 2 und der Ziehklingenwerkzeugkörper 3 lediglich Bewegungen in Richtung 7 der Drehachse 6 gegeneinander ausführen können. Eine Drehbewegung des Fräswerkzeugkörpers 2 relativ zum Ziehklingenwerkzeugkörper 3 ist dadurch ausgeschlossen.

Fig. 8 zeigt eine Ansicht auf den Fräswerkzeugkörper 2 auf die dem Ziehklingenwerkzeugkörper 3 abgewandte Seite des Fräswerkzeugkörpers 2. In dieser Darstellung ist erkennbar, dass die Ausnehmungen 26 im Fräswerkzeugkörper 2 nicht nur zur Befestigung der Fräsplatten 28 dienen, sondern auch als Spanraum für die von einem bearbeiteten Werkstück von der Frässchneide 8 abgenommenen Späne.

## Patentansprüche

1. Kombiniertes Fräs- und Ziehklingenwerkzeug, umfassend mindestens einen Fräswerkzeugkörper (2) und mindestens einen Ziehklingenwerkzeugkörper (3), wobei der Fräswerkzeugkörper (2) und der Ziehklingenwerkzeugkörper (3) getrennt voneinander ausgebildet sind, wobei in einem Ziehbetriebsmodus (4) der Ziehklingenwerkzeugkörper (3) drehfest gelagert ist und das kombinierte Fräs- und Ziehklingenwerkzeug (1) als Ziehklingenwerkzeug nutzbar ist, wobei in einem Drehbetriebsmodus (5) der Fräswerkzeugkörper (2) um eine Drehachse (6) des Fräswerkzeugkörpers (2) drehbar ist und das kombinierte Fräs- und Ziehklingenwerkzeug (1) als Fräswerkzeug nutzbar ist,
**dadurch gekennzeichnet, dass** der Fräswerkzeugkörper (2) und der Ziehklingenwerkzeugkörper (3) im Drehbetriebsmodus (5) gemeinsam um die Drehachse (6) drehbar sind, und dass der Fräswerkzeugkörper (2) und der Ziehklingenwerkzeugkörper (3) in Richtung (7) der Drehachse (6) gegeneinander beweglich gelagert sind.

2. Kombiniertes Fräs- und Ziehklingenwerkzeug nach Anspruch 1,
**dadurch gekennzeichnet, dass** am Fräswerkzeugkörper (2) mindestens eine Frässchneide (8) angeordnet, dass am Ziehklingenwerkzeugkörper (3) mindestens eine Ziehklingenschneiden (9) angeordnet ist, dass die Ziehklingenschneide (9) und die Frässchneide (8) im Ziehbetriebsmodus (4) zumindest teilweise gemeinsam in einer Ebene senkrecht zur Drehachse (6) liegen, und dass im Ziehbetriebsmodus (4) in jeder Ebene (10) senkrecht zur Drehachse (6), die sowohl die Frässchneide (8) als auch die Ziehklingenschneide (9) schneidet, der Abstand (r) der Frässchneide (8) von der Drehachse (6) kleiner als der Abstand (R) der Ziehklingenschneide (9) von der Drehachse (6) ist.

3. Kombiniertes Fräs- und Ziehklingenwerkzeug nach Anspruch 1 oder 2,
**dadurch gekennzeichnet, dass** zwischen dem Fräswerkzeugkörper (2) und dem Ziehklingenwerkzeugkörper (3) mindestens ein Fliehkörper (11) angeordnet ist, dass der Fräswerkzeugkörper (2), der Ziehklingenwerkzeugkörper (3) und der Fliehkörper (11) Elemente einer Baugruppe (12) bilden, dass an der Baugruppe (12) mindestens eine schiefe Ebene (13) zwischen ihren Elementen ausgebildet ist, dass die schiefe Ebene (13) sich in radialer Richtung (14) zur Drehachse (6) erstreckt, dass der Fräswerkzeugkörper (2) und der Ziehklingenwerkzeugkörper (3) je mindestens eine Kontaktfläche (15, 16) mit dem Fliehkörper (11) aufweisen, und dass der Fliehkörper (11) in mindestens einem der beiden Betriebsmodi (4, 5) beide Kontaktflächen (15, 16) zugleich kontaktiert.

4. Kombiniertes Fräs- und Ziehklingenwerkzeug nach Anspruch 3,
**dadurch gekennzeichnet, dass** die schiefe Ebene (13) an mindestens einer der beiden Kontaktflächen (15, 16) ausgebildet ist, und dass der Abstand (dᵢ, dₐ) der Kontaktflächen (15, 16) zueinander in radialer Richtung (14) zur Drehachse (6) von der Drehachse (6) weg abnimmt.

5. Kombiniertes Fräs- und Ziehklingenwerkzeug nach Anspruch 4,
**dadurch gekennzeichnet, dass** im Drehbetriebsmodus (5) in jeder Ebene (10) senkrecht zur Drehachse (6), die sowohl die Frässchneide (8) als auch die Ziehklingenschneide (9) schneidet, der Abstand (r) der Frässchneide (8) von der Drehachse (6) größer als der Abstand (R) der Ziehklingenschneide (9) von der Drehachse (6) ist.

6. Kombiniertes Fräs- und Ziehklingenwerkzeug nach einem der Ansprüche 1 bis 5,
**dadurch gekennzeichnet, dass** der Ziehklingenwerkzeugkörper (3) in Richtung (18) auf den Fräswerkzeugkörper (2) vorgespannt ist.

## Geänderte Patentansprüche

### Geänderte Patentansprüche gemäss Regel 137(2) EPÜ.

1. Kombiniertes Fräs- und Ziehklingenwerkzeug, umfassend mindestens einen Fräswerkzeugkörper (2) und mindestens einen Ziehklingenwerkzeugkörper (3), wobei der Fräswerkzeugkörper (2) und der Ziehklingenwerkzeugkörper (3) getrennt voneinander ausgebildet sind, wobei in einem Ziehbetriebsmodus (4) der Ziehklingenwerkzeugkörper (3) drehfest gelagert ist und das kombinierte Fräsund Ziehklingenwerkzeug (1) als Ziehklingenwerkzeug nutzbar ist, wobei in einem Drehbetriebsmodus (5) der Fräswerkzeugkörper (2) um eine Drehachse (6) des Fräswerkzeugkörpers (2) drehbar ist und das kombinierte Fräs- und Ziehklingenwerkzeug (1) als Fräswerkzeug nutzbar ist,
wobei der Fräswerkzeugkörper (2) und der Ziehklingenwerkzeugkörper (3) im Drehbetriebsmodus (5) gemeinsam um die Drehachse (6) drehbar sind, und dass der Fräswerkzeugkörper (2) und der Ziehklingenwerkzeugkörper (3) in Richtung (7) der Drehachse (6) gegeneinander beweglich gelagert sind,
**dadurch gekennzeichnet, dass** zwischen dem Fräswerkzeugkörper (2) und dem Ziehklingenwerkzeugkörper (3) mindestens ein Fliehkörper (11) angeordnet ist, dass der Fräswerkzeugkörper (2), der Ziehklingenwerkzeugkörper (3) und der Fliehkörper (11) Elemente einer Baugruppe (12) bilden, dass an der Baugruppe (12) mindestens eine schiefe Ebene (13) zwischen ihren Elementen ausgebildet ist, dass die schiefe Ebene (13) sich in radialer Richtung (14) zur Drehachse (6) erstreckt, dass der Fräswerkzeugkörper (2) und der Ziehklingenwerkzeugkörper (3) je mindestens eine Kontaktfläche (15, 16) mit dem Fliehkörper (11) aufweisen, und dass der Fliehkörper (11) in mindestens einem der beiden Betriebsmodi (4, 5) beide Kontaktflächen (15, 16) zugleich kontaktiert¹.

2. Kombiniertes Fräs- und Ziehklingenwerkzeug nach Anspruch 1,
**dadurch gekennzeichnet, dass** am Fräswerkzeugkörper (2) mindestens eine Frässchneide (8) angeordnet, dass am Ziehklingenwerkzeugkörper (3) mindestens eine Ziehklingenschneiden (9) angeordnet ist, dass die Ziehklingenschneide (9) und die Frässchneide (8) im Ziehbetriebsmodus (4) zumindest teilweise gemeinsam in einer Ebene senkrecht zur Drehachse (6) liegen, und dass im Ziehbetriebsmodus (4) in jeder Ebene (10) senkrecht zur Drehachse (6), die sowohl die Frässchneide (8) als auch die Ziehklingenschneide (9) schneidet, der Abstand (r) der Frässchneide (8) von der Drehachse (6) kleiner als der Abstand (R) der Ziehklingenschneide (9) von der Drehachse (6) ist.

3. Kombiniertes Fräs- und Ziehklingenwerkzeug nach Anspruch 1 oder 2,
**dadurch gekennzeichnet, dass** die schiefe Ebene (13) an mindestens einer der beiden Kontaktflächen (15, 16) ausgebildet ist, und dass der Abstand (dᵢ, dₐ) der Kontaktflächen (15, 16) zueinander in radialer Richtung (14) zur Drehachse (6) von der Drehachse (6) weg abnimmt.

4. Kombiniertes Fräs- und Ziehklingenwerkzeug nach Anspruch 3,
**dadurch gekennzeichnet, dass** im Drehbetriebsmodus (5) in jeder Ebene (10) senkrecht zur Drehachse (6), die sowohl die Frässchneide (8) als auch die Ziehklingenschneide (9) schneidet, der Abstand (r) der Frässchneide (8) von der Drehachse (6) größer als der Abstand (R) der Ziehklingenschneide (9) von der Drehachse (6) ist.
¹ Ursprünglicher Anspruch 3

5. Kombiniertes Fräs- und Ziehklingenwerkzeug nach einem der Ansprüche 1 bis 4,
**dadurch gekennzeichnet, dass** der Ziehklingenwerkzeugkörper (3) in Richtung (18) auf den Fräswerkzeugkörper (2) vorgespannt ist.
